# EUROPÄISCHE PATENTSCHRIFT

(11) **EP 3 910 298 B1**
(45) Veröffentlichungstag und Bekanntmachung des Hinweises auf die Patenterteilung: **04.05.2022**
(21) Anmeldenummer: 20174959.5
(22) Anmeldetag: 15.05.2020
(51) Int. Cl.: G01F 23/00, G01F 23/284

(54) **ABNEHMBARES ANZEIGE- UND BEDIENMODUL FÜR EIN FELDGERÄT**
REMOVABLE DISPLAY AND CONTROL MODULE FOR A FIELD DEVICE
MODULE D'AFFICHAGE ET DE COMMANDE AMOVIBLE POUR UN APPAREIL DE TERRAIN

(43) Veröffentlichungstag der Anmeldung: 17.11.2021
(73) Patentinhaber: VEGA Grieshaber KG, 77709 Wolfach (DE)
(72) Erfinder: WELLE, Roland, 77756 Hausach (DE); KAUFMANN, Manuel, 77791 Berghaupten (DE); WÄLDE, Steffen, 78078 Niedereschach (DE)
(74) Vertreter: Maiwald Patent- und Rechtsanwaltsgesellschaft mbH

(56) Entgegenhaltungen:
- EP-A1- 2 803 956
- EP-A1- 2 829 929
- EP-A1- 3 637 065
- EP-A2- 1 925 918
- WO-A1-2004/017025
- WO-A1-2011/113142
- ME-MESSSYSTEME: "Grundlagen zum CAN Bus", , 3. September 2004 (2004-09-03), XP055737702, Gefunden im Internet: URL:https://www.mikrocontroller.net/attach ment/6819/canbus.pdf [gefunden am 2020-10-07]

## Beschreibung

### Gebiet der Erfindung

Die Erfindung betrifft ein abnehmbares Anzeige- und Bedienmodul für ein Feldgerät, zur Füllstandmessung oder zur Grenzstandbestimmung. Insbesondere betrifft die Erfindung ein Feldgerät mit einem Funkmodul, ein Sensorgehäuse, ein Herstellungsverfahren und eine Verwendung.

### Hintergrund

Zur Füllstandmessung oder zur Grenzstandbestimmung werden Messgeräte, insbesondere Feldgeräte, in vielen Fällen mit einem Funkmodul ausgerüstet, beispielsweise um eine einfache Einbindung der Geräte in ein Automatisierungssystem zu erreichen. Konzepte für derartige Automatisierungssystem werden gelegentlich mit dem Begriff "Industrie 4.0" bezeichnet. Zumindest einige der Feldgeräte werden mit robusten, metallischen Sensorgehäusen ausgestattet, um Beschädigungen durch Umwelteinflüsse - z.B. mechanische Belastungen Feuchtigkeit, UV-Strahlung, usw. - zu reduzieren. Das metallische Sensorgehäuse kann allerdings die Reichweite von Funkwellen von einem Funkmodul, das im Inneren des Sensorgehäuses angeordnet ist, zumindest reduzieren.

Die Druckschrift EP 2 803 956 A1 betrifft ein Servicemodul mit einem abnehmbaren Anzeige- und Bedienmodul für ein Füllstandmessgerät Die WO 2011 113 142 A1 betrifft ein Radarmessgerät mit einem Funkmodul zur Messung eines Volumens einer Flüssigkeit in einem Tank.

### Zusammenfassung

Es ist eine Aufgabe der Erfindung, die Reichweite eines Funkmoduls zumindest teilweise zu verbessern. Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt betrifft ein abnehmbares Anzeige- und Bedienmodul für ein Messgerät und/oder ein Feldgerät zur Füllstandmessung oder zur Grenzstandbestimmung. Das Anzeige- und Bedienmodul weist ein Funkmodul auf und ein elektrisches Verbindungselement, das dazu eingerichtet ist, mit einem Verbindungsgegenstück eine lösbare Verbindung zur Übertragung von Hochfrequenzsignalen von dem Funkmodul an eine Hochfrequenzgehäusedurchführung und/oder an eine Antenne des Feldgeräts zu bilden.

Die Bezeichnung "Anzeige- und Bedienmodul" wird im Folgenden stellvertretend für ein Modul eines Feldgeräts verwendet, das ein Funkmodul beinhaltet. Dies kann ein Anzeige- und Bedienmodul sein, nur ein Anzeigemodul, nur ein Bedienmodul, nur ein Funkmodul, Kombinationen und/oder weitere Ausprägungen eines derartigen Moduls. Das abnehmbare Anzeige- und Bedienmodul kann beispielsweise auf einer Feldgeräteelektronik aufgesteckt und/oder auf andere Weise innerhalb eines Sensorgehäuses lösbar angeordnet sein. In zumindest einigen Ausführungsformen kann damit ein modulares Konzept realisiert sein, das es z.B. ermöglicht, verschiedene Typen von Sensoren mit dem Anzeige- und Bedienmodul und/oder anderen Modulen, die zumindest teilweise innerhalb des Sensorgehäuses angeordnet sind, zu kombinieren. Die Sensoren können beispielsweise als ein Impedanzgrenzschalter, ein Vibrationsgrenzschalter, ein Messgerät mit einem Hochfrequenzfrontend, Ultraschallfrontend oder Laserfrontend, und/oder als radiometrische Messvorrichtung ausgeführt sein. Ein modulares Konzept für Messgeräte oder Feldgeräte ist beispielsweise in dem Baukastensystem plics^{®} der Firma Vega realisiert. Als Beispiel für ein Anzeige- und Bedienmodul kann das Anzeige- und Bedienmodul PLICSCOM genannt werden, das zur Inbetriebnahme und Bedienung der plics^{®}-Sensoren dienen kann.

Für zumindest einige Anwendungsfälle der Prozessautomatisierung und/oder in einem Automatisierungssystem kann es vorteilhaft sein, das Messgerät oder Feldgerät mit einem Funkmodul auszurüsten, um zum Beispiel Messwerte, Daten zur vorausschauenden Sensor- und Anlagenwartung, Parametrisierungsdaten und/oder weitere Typen von Daten drahtlos zu übertragen, z.B. an einen Nutzer des Automatisierungssystems und/oder des Feldgeräts, an eine Prozessleitstelle, eine Cloud und/oder an weitere Empfangsstellen. Zumindest einige der verwendeten Funkstandards können beispielsweise auf niedrigen Energieverbrauch und/oder hohen Datendurchsatz optimiert sein. Da Geräte der Prozessautomation in vielen Fällen potentiell schädigenden Umwelteinflüssen ausgesetzt sind, können zumindest einige dieser Geräte ein metallisches Sensorgehäuse aufweisen. Das metallische Sensorgehäuse kann erforderlich oder zumindest nützlich sein, um die Einwirkung von Umwelteinflüssen wie z.B. Temperaturschwankungen, Feuchtigkeit, UV-Strahlung, mechanischen Belastungen, usw. zu reduzieren. Allerdings kann das metallische Sensorgehäuse die Ausbreitung der Funkwellen beinträchtigen, wenn das Funkmodul innerhalb des Gehäuses angeordnet ist. Auch zumindest einige Typen von nicht-metallischen Sensorgehäusen können ebenfalls die Ausbreitung der Funkwellen beinträchtigen. Dies kann beispielsweise der Fall sein, wenn das Funkmodul als Teil des Anzeige- und Bedienmoduls konzipiert ist; diese Anordnung kann das modulare Konzept des Feldgeräts unterstützen. Die Anordnung innerhalb des Gehäuses steht aber Anforderungen wie niedrigem Energieverbrauch und/oder hohem Datendurchsatz entgegen. Mit dem elektrischen Verbindungselement, das dazu eingerichtet ist, mit einem Verbindungsgegenstück eine lösbare Verbindung zur Übertragung von Hochfrequenzsignalen von dem Funkmodul an eine Hochfrequenzgehäusedurchführung des Feldgeräts zu bilden, können diese gegensätzlichen Anforderungen vorteilhafterweise überwunden werden. Insbesondere kann die Hochfrequenzgehäusedurchführung genutzt werden, um die Hochfrequenzsignale an eine Antenne weiterzuleiten und/oder um eine Antenne anzuschließen, und auf diese Weise eine hohe Reichweite, niedrigen Energieverbrauch und/oder hohen Datendurchsatz zu erreichen. Dies kann sowohl für metallische Sensorgehäuse als auch für nicht-metallische Sensorgehäuse gelten. Die Hochfrequenzgehäusedurchführung ist eine Gehäusedurchführung, die zur Übertragung und/oder Weiterleitung von Hochfrequenzen eingerichtet ist. Mit dieser Ausführung des Anzeige- und Bedienmoduls können weiter vorteilhaft Informations- und Kommunikationssysteme der sog. "Industrie 4.0" in besonders einfacher Weise genutzt und/oder integriert werden.

In einigen Ausführungsformen ist das elektrische Verbindungselement auf einer Leiterplatte fixiert. Das elektrische Verbindungselement kann zum Beispiel auf einer Leiterplatte, Leiterkarte, Platine und/oder gedruckten Schaltung angelötet, geklebt, gegossen, geschweißt, verschraubt und/oder anderweitig fixiert sein. Damit wird vorteilhafterweise eine besonders einfach handhabbare Verbindung zur Verfügung gestellt, die unaufwändig in die Produktion des Anzeige- und Bedienmoduls integriert werden kann.

In einigen Ausführungsformen ist das elektrische Verbindungselement über ein Kabel mit der Leiterplatte verbunden. Das Kabel kann beispielsweise an die Leiterplatte angelötet und/oder anderweitig fixiert sein. Das Kabel kann in einer Ausführungsform relativ kurz ausgeführt sein, z.B. nur eine Länge von wenigen Zentimetern (cm) aufweisen. Damit kann vorteilhafterweise ein besonders flexibler Anschluss an die Hochfrequenzgehäusedurchführung realisiert werden.

In einigen Ausführungsformen ist das elektrische Verbindungselement als Koaxialstecker und das Verbindungsgegenstück als Koaxialbuchse ausgeführt, oder das elektrische Verbindungselement ist als Koaxialbuchse und das Verbindungsgegenstück als Koaxialstecker ausgeführt. Die Koaxialverbindung kann schraubbar, als Bajonett und/oder als steckbare Verbindung ausgeführt sein. Koaxiale Kabel und Steckverbinder haben den Vorteil, dass sie hochfrequente elektromagnetische Wellen, wie sie zur Funkkommunikation eingesetzt werden, besonders verlustarm leiten können. Alternativ oder zusätzlich können auch andere Typen von Verbindungen verwendet werden, z.B. verdrillte Zweidrahtleitungen (Twisted Pair), oder auch andere HF-Verbindungen, wie z.B. USB, Firebolt, etc.

Erfindungsgemäß ist das elektrische Verbindungselement in einer ersten Variante zur Übertragung von Frequenzen in einem ISM-Band (ISM: Industrial, Scientific and Medical Band) und/oder einem Telekommunikationsband eingerichtet. Das Telekommunikationsband kann z.B. Funknetze wie 2G, 3G, LTE, 5G, etc. nutzen. Die ISM-Bänder können z.B. von Funkstandards wie Bluetooth, IEEE 802.15.4 (z.B. mit ANT, Bluetooth, ZigBee), LoRa, Mioty genutzt werden. Das Funkmodul kann beispielsweise die Protokolle eines ein Wireless Personal Area Network (WPAN), eines Wireless LAN (WLAN) und/oder eines Niedrigenergieweitverkehrnetzwerks (LPWAN) unterstützen. Die verwendeten Protokolle und/oder Frequenzen können beispielsweise auf niedrigen Energieverbrauch oder hohen Datendurchsatz optimiert sein. Die Funkvorrichtung kann dazu eingerichtet sein, Daten an einen Server und/oder ein anderes Mess- und/oder Anzeigegerät zu übertragen und/oder von diesen zu empfangen.

Zusammen mit einem modularen Konzept für das Feldgerät kann das Anzeige- und Bedienmodul mit verschiedenen Arten von Kommunikationsprotokollen und/oder -frequenzen ausgestattet und/oder nachrüstbar sein, um damit ein breites Feld von Anforderungen abdecken zu können.

Erfindungsgemäß ist das elektrische Verbindungselement in einer zweiten Variante zur Übertragung von Frequenzen zwischen 100 MHz und 10 GHz, insbesondere zwischen 2 GHz und 5 GHz, eingerichtet. In diesen Frequenzbereichen kann die "Auslagerung" der Antenne besonders vorteilhaft zur Verbesserung der Übertragungseigenschaften sein.

In einigen Ausführungsformen ist das Anzeige- und Bedienmodul zum Anordnen innerhalb eines Sensorgehäuses eingerichtet. Diese Anordnung kann insbesondere ein modulares Konzept für den Aufbau eines Feldgeräts unterstützen.

Ein Aspekt betrifft ein Sensorgehäuse für ein Feldgerät zur Füllstandmessung oder zur Grenzstandbestimmung, das dazu eingerichtet ist, ein Anzeige- und Bedienmodul mit einem Funkmodul und/oder ein elektrisches Verbindungselement, wie oben und/oder nachfolgend beschrieben, vollständig aufzunehmen. Dabei weist das Sensorgehäuse eine Hochfrequenzgehäusedurchführung auf, die zur Übertragung von Hochfrequenzsignalen von dem Funkmodul und zum Anschluss an eine Antenne eingerichtet ist. Dadurch, dass das Sensorgehäuse diese Elemente vollständig aufnimmt, kann eine wirksame Schutzfunktion, z.B. gegenüber potentiell schädigenden Umwelteinflüssen, realisiert werden.

In einigen Ausführungsformen ist die Hochfrequenzgehäusedurchführung als Koaxialstecker oder als Koaxialbuchse ausgeführt. Beispielsweise kann die Gehäusedurchführung in ein Gewinde des Sensorgehäuses eingeschraubt werden, z.B. in ein Gewinde, das bei der Fertigung für diese Anwendung an dem Sensorgehäuse angeordnet ist und, z.B. abdichtbar, das Sensorgehäuse durchdringt. Dafür sind eine Reihe von Kabelverschraubungen verwendbar, beispielsweise PG-Verschraubungen, metrische Gewinde, NPT-Verschraubungen und/oder weitere Arten von Verschraubungen. Die Hochfrequenzgehäusedurchführung ist bevorzugt robust ausgeführt.

In einigen Ausführungsformen ist das elektrische Verbindungselement als Koaxialstecker oder als Koaxialbuchse ausgeführt. Als Verbindungstypen, d.h. wie die Antenne an das koaxiale Kabel angeschlossen wird, können beispielsweise koaxiale Verbinder verwendet werden, z.B. in den Varianten SMA, MCX, MMCX, SMP, und/oder weitere.

In einigen Ausführungsformen ist die Antenne in das Sensorgehäuse integrierbar ausgeführt. Die integrierbare Antenne kann z.B. als lösbarer oder nicht-lösbarer Teil des Sensorgehäuses realisiert sein.

Ein Aspekt betrifft ein Verfahren zur Herstellung eines Feldgeräts zur Füllstandmessung oder zur Grenzstandbestimmung, mit den Schritten:
bereitstellen eines Sensorgehäuses des Feldgeräts;
anordnen einer Hochfrequenzgehäusedurchführung und/oder einer Antenne, die mit einem Verbindungsgegenstück, d.h. einem Gegenstück zu einem elektrischen Verbindungselement, verbunden ist, an dem Sensorgehäuse;
verbinden des Verbindungsgegenstücks mit einem elektrischen Verbindungselement, das mit einem Funkmodul eines abnehmbaren Anzeige- und Bedienmoduls verbunden ist; und anordnen des Anzeige- und Bedienmoduls in dem Sensorgehäuse, wobei das Sensorgehäuse das Anzeige- und Bedienmodul und das Verbindungselement vollständig aufnimmt.

Die Hochfrequenzgehäusedurchführung kann eine elektrische und mechanische Verbindung realisieren. Die Hochfrequenzgehäusedurchführung kann z.B. an einer Wandung angeordnet sein, wobei eine elektrische Durchführung durch die Wandung realisiert ist. Die Hochfrequenzgehäusedurchführung kann z.B. in einer Gehäusedurchführung angeordnet sein, die in einem Gewinde in dem Gehäuse angeordnet ist. Die Gehäusedurchführung kann dabei so beschaffen sein, dass sie die innenliegende Sensorelektronik gegen Umwelteinflüsse schützt. Nach dem Einschrauben der Gehäusedurchführung können die HF-Steckverbinder, z.B. das elektrische Verbindungselement und das Verbindungsgegenstück, verbunden werden. Anschließend kann das Anzeige- und Bedienmodul, z.B. mittels der Bajonettverschlüsse, mit der Sensorelektronik verbunden werden. Dann kann die Antenne an den Stecker der Gehäusedurchführung angeschlossen werden. Vorteile können sich weiterhin beim Einbau des Anzeige- und Bedienmoduls ergeben. In einigen Ausführungsformen, z.B. bei dem plics^{®} System von Vega, kann vorgesehen sein, dass das elektrische Verbindungselement erst dann gesteckt wird, wenn die Gehäusedurchführung eingeschraubt ist.

In einigen Ausführungsformen weist das Verfahren folgende weitere Schritte auf:
Anordnen einer Antenne an dem Sensorgehäuse; und
Verbinden der Antenne mit der Hochfrequenzgehäusedurchführung.

Das Anordnen der Antenne kann z.B. an einer Wandung des Sensorgehäuses realisiert sein, die Antenne kann auch integriert und/oder steckbar lösbar ausgeführt sein. Das Verbinden kann elektrisch und gegebenenfalls mechanisch ausgeführt sein. Als alternative Ausführungsform kann die Antenne extern befestigt sein, und/oder z.B. als Wurfantenne ausgeführt sein. Je nach Funkstandard können unterschiedliche Antennen zum Einsatz kommen. Die Antennen können dabei auf den entsprechenden Frequenzbereich angepasst sein.

Ein Aspekt betrifft eine Verwendung eines Messgeräts, Feldgeräts, Messsystems und/oder eines Sensorgehäuses wie oben und/oder nachfolgend beschrieben, oder eines Verfahrens wie oben und/oder nachfolgend beschrieben zur Füllstandmessung oder zur Grenzstandbestimmung.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen. In den Figuren bezeichnen gleiche Bezugszeichen gleiche oder ähnliche Elemente.

### Kurze Beschreibung der Figuren

Es zeigt:
- **Fig. 1**: eine Skizze eines Anzeige- und Bedienmoduls gemäß einer Ausführungsform in perspektivischer Darstellung;
- **Fig. 2**: eine Skizze eines Anzeige- und Bedienmoduls gemäß einer Ausführungsform in Vorderansicht;
- **Fig. 3**: schematisch eine Skizze eines Anzeige- und Bedienmoduls gemäß einer Ausführungsform in Seitenansicht;
- **Fig. 4**: schematisch eine Skizze eines Anzeige- und Bedienmoduls mit einem Verbindungselement und weiteren Elementen gemäß einer weiteren Ausführungsform;
- **Fig. 5**: schematisch eine Skizze eines Anzeige- und Bedienmoduls mit einem Verbindungselement und weiteren Elementen gemäß einer weiteren Ausführungsform;
- **Fig. 6**: schematisch eine Skizze eines Anzeige- und Bedienmoduls mit einem Verbindungselement gemäß einer weiteren Ausführungsform in Rückansicht;
- **Fig. 7**: schematisch eine Skizze eines Feldgeräts gemäß einer Ausführungsform in perspektivischer Seitenansicht;
- **Fig. 8**: schematisch eine Skizze eines Feldgeräts gemäß einer Ausführungsform in Draufsicht;
- **Fig. 9**: schematisch eine Skizze eines Feldgeräts gemäß einer weiteren Ausführungsform in perspektivischer Ansicht;
- **Fig. 10**: ein Herstellungsverfahren eines Feldgeräts gemäß einer Ausführungsform.

### Detaillierte Beschreibung von Ausführungsformen

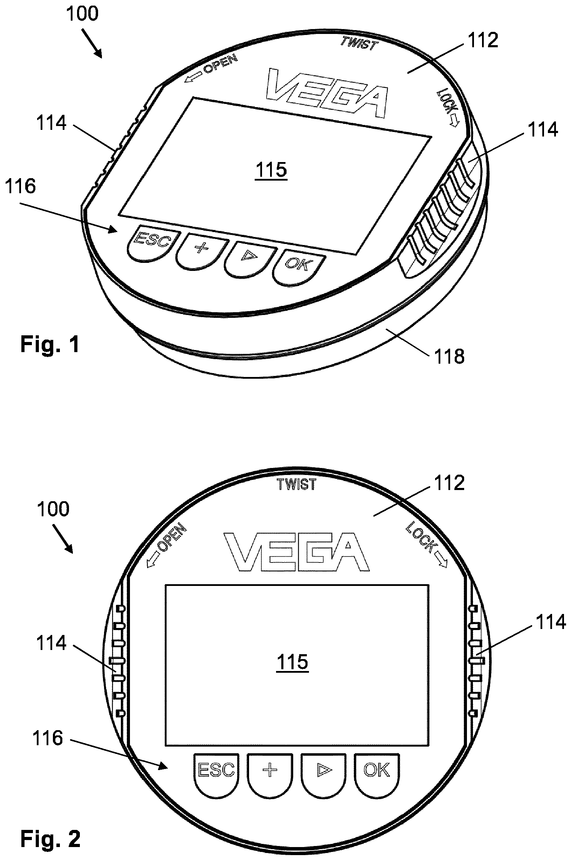

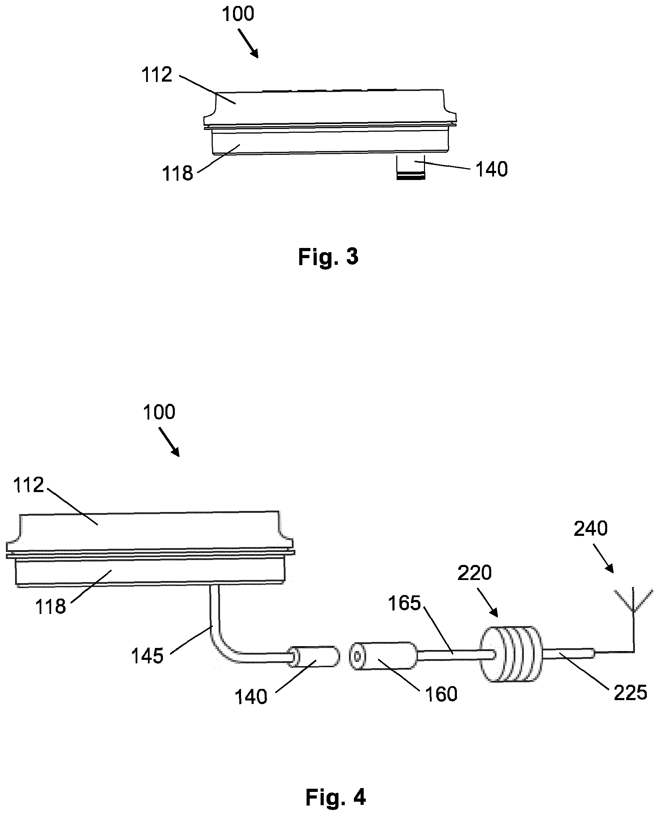

**Fig. 1** zeigt eine Skizze eines Anzeige- und Bedienmoduls 100 gemäß einer Ausführungsform in perspektivischer Darstellung. Das Anzeige- und Bedienmodul 100 weist einen oberen Teil 112 und einen unteren Teil 118 auf. In dem oberen Teil 112 sind seitliche Griffe 114, ein Display 115 und Bedientasten 116 angeordnet. Mittels der seitlichen Griffe 114 kann das Abnehmen oder Lösen und das Aufstecken des Anzeige- und Bedienmoduls 100 in einfacher Weise bewerkstelligt werden. **Fig. 2** zeigt die in **Fig. 1** gezeigten Elemente des oberen Teils 112 in Vorderansicht. **Fig. 3** zeigt den oberen Teil 112 und den unteren Teil 118 des Anzeige- und Bedienmoduls 100 in Seitenansicht. Weiterhin ist ein elektrisches Verbindungselement 140 dargestellt, das in dieser Ausführungsform aus dem unteren Teil 118 herausragt und das z.B. als Koaxialstecker ausgeführt sein kann.

**Fig. 4** zeigt eine schematische Skizze eines Anzeige- und Bedienmoduls 100 mit einem Verbindungselement und weiteren Elementen gemäß einer weiteren Ausführungsform. Dabei ist ein elektrisches Verbindungselement 140 (z.B. ein Koaxialstecker) durch eine Leitung 145 (z.B. eine Koaxialleitung) mit dem Anzeige- und Bedienmodul 100 verbunden. Das elektrische Verbindungselement 140 ist mit einem Verbindungsgegenstück 160 (z.B. einer Koaxialbuchse) verbindbar, d.h. elektrisch und/oder mechanisch verbindbar. Das Verbindungsgegenstück 160 ist über eine Leitung 165 (z.B. eine Koaxialleitung) mit einer Hochfrequenzgehäusedurchführung 220 verbunden. Von der Hochfrequenzgehäusedurchführung 220 ist eine Leitung 225 (z.B. eine Koaxialleitung) mit einer Antenne 240 verbunden.

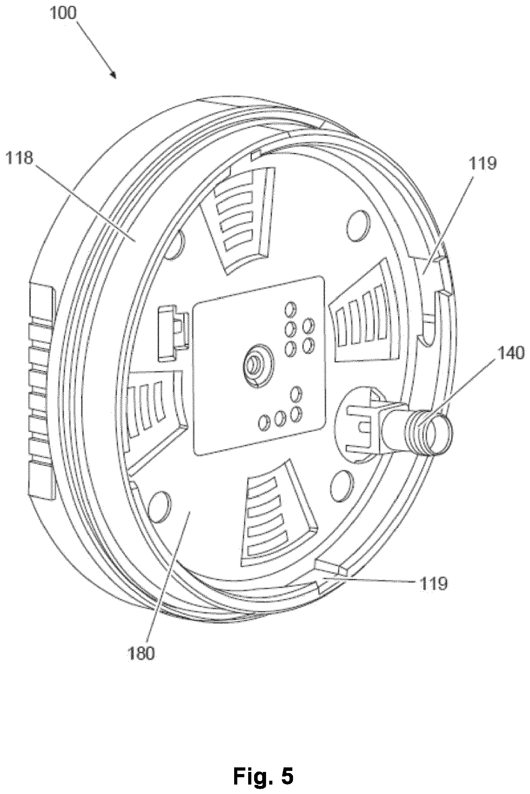

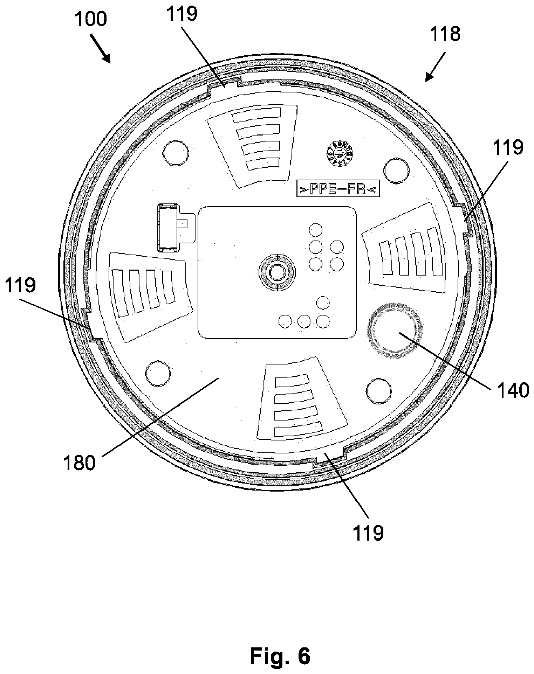

**Fig. 5** zeigt eine schematische Skizze eines Anzeige- und Bedienmoduls 100 mit einem Verbindungselement 140 und weiteren Elementen gemäß einer weiteren Ausführungsform in einer seitlichen Untersicht. In diesem Ausführungsbeispiel ist das Verbindungselement 140 auf einer Leiterplatte 180 fixiert. Weiterhin sind Bajonettverschlüsse 119 dargestellt, die an einem ringförmigen Element des unteren Teils 118 angeordnet sind, so dass durch Drehen ein einfaches Abnehmen oder Lösen und/oder Aufstecken des Anzeige- und Bedienmoduls 100 bewerkstelligt werden kann. Dies unterstützt das genannte Konzept des Baukastensystems. **Fig. 6** zeigt die in **Fig. 5** gezeigten Elemente des unteren Teils 118 in Rückansicht.

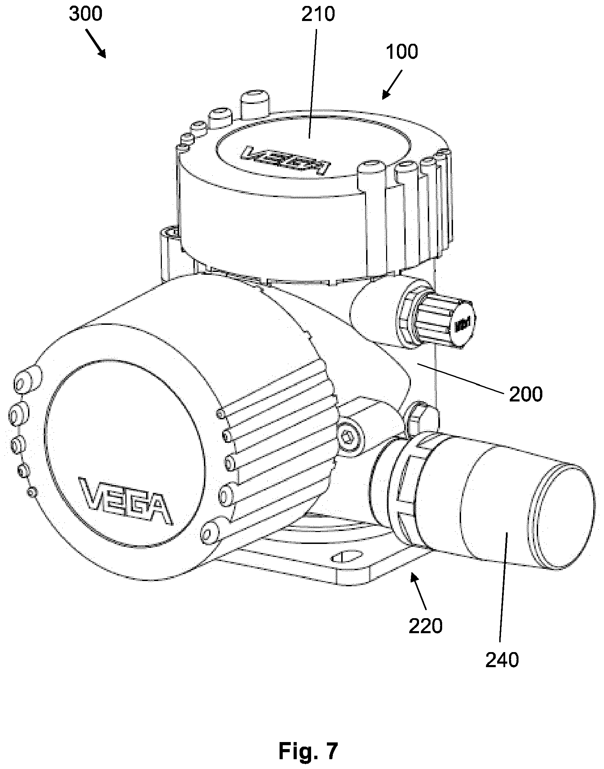

**Fig. 7** zeigt eine schematische Skizze eines Feldgeräts 300 gemäß einer Ausführungsform in perspektivischer Seitenansicht. Das Feldgerät 300 weist ein robustes, metallisches Sensorgehäuse 200 auf. In dem Sensorgehäuse 200 ist ein Anzeige- und Bedienmodul 100 angeordnet, das durch das Metallgehäuse 200 geschützt ist. Das Metallgehäuse 200 kann nicht-metallische Teile aufweisen, wie zum Beispiel das Sichtfenster 210, durch das ein Blick auf ein Display 115 (siehe z.B. **Fig. 1****)** möglich ist. In einer Ausführungsform kann das Sichtfenster durch eine Öffnung ersetzt, so dass eine Bedienung der Bedientasten 116 ermöglicht wird. Wenn die Bedientasten 116 nicht direkt zugänglich sind, so ist eine Bedienung des Feldgeräts 300 über Funk möglich. An einer Hochfrequenzgehäusedurchführung 220 ist eine Antenne 240 angeordnet. Bei Verwendung von anderen Frequenzbändern kann die Antenne anders gestaltet sein.

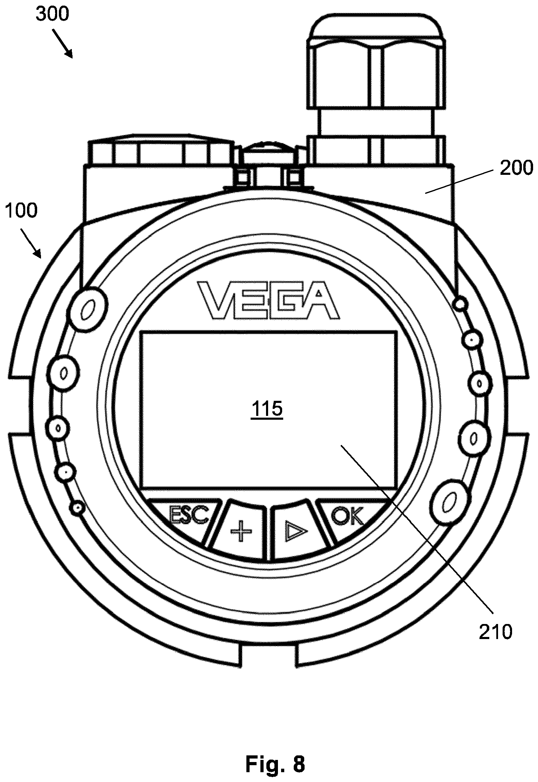

**Fig. 8** zeigt eine schematische Skizze eines Feldgeräts 300 gemäß einer Ausführungsform in Draufsicht. Durch ein Sichtfenster 210 in einem Metallgehäuse 200 ist das aufgesteckte Anzeige- und Bedienmodul 100 zu sehen.

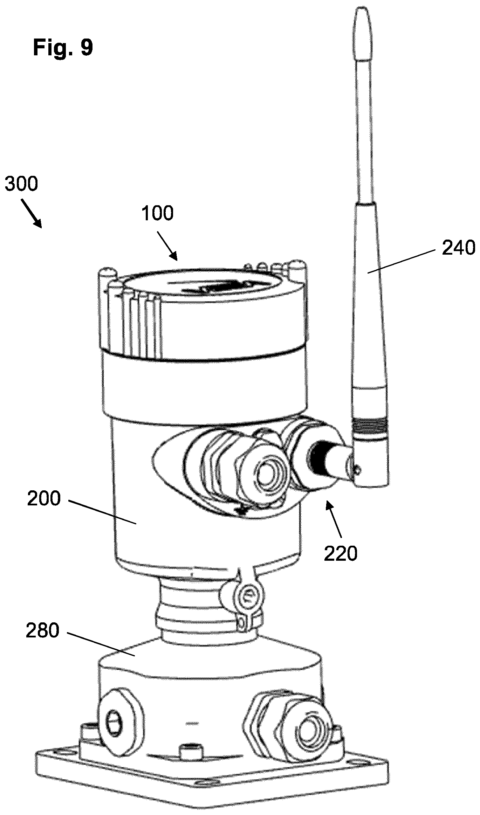

**Fig. 9** zeigt eine schematische Skizze eines Feldgeräts 300 gemäß einer weiteren Ausführungsform in perspektivischer Ansicht. Dabei nimmt das Sensorgehäuse 200 das Anzeige- und Bedienmodul 100 und das Verbindungselement 140 (nicht sichtbar) vollständig auf, so dass diese Elemente durch das Sensorgehäuse 200 von Beschädigungen durch Umwelteinflüsse in hohem Maße geschützt sind. Ein Sensorgerät 280 ist von dem metallischen Sensorgehäuse 200 nur teilweise aufgenommen und verfügt über einen eigenen Schutz. An einer Hochfrequenzgehäusedurchführung 220 ist eine Antenne 240 angeordnet, die für einen anderen Frequenzbereich ausgelegt ist als die in **Fig. 7** gezeigte Antenne und daher eine andere Form aufweist. Die Hochfrequenzgehäusedurchführung 220 kann dabei ähnlich oder gleich gestaltet sein wie die in **Fig. 7** gezeigte.

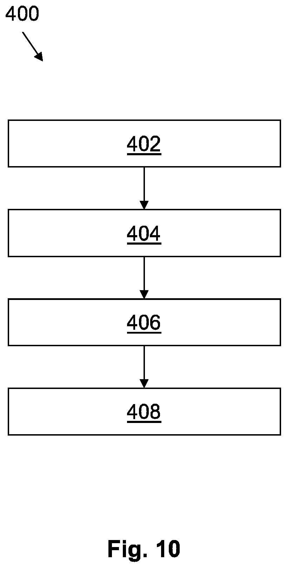

**Fig. 10** zeigt ein Flussdiagramm 400 eines Herstellungsverfahrens eines Feldgeräts 300 (siehe z.B. **Fig. 7** bis **9****)** gemäß einer Ausführungsform. In einem Schritt 402 wird ein Sensorgehäuse 200, insbesondere ein metallisches Sensorgehäuse, des Feldgeräts 300 bereitgestellt. In einem Schritt 404 wird eine Hochfrequenzgehäusedurchführung 220, die mit einem Verbindungsgegenstück 160 verbunden ist, an dem Sensorgehäuse 200 angeordnet. In einem Schritt 406 wird das Verbindungsgegenstück 160 mit einem elektrischen Verbindungselement 140 verbunden, das seinerseits mit einem abnehmbaren Anzeige- und Bedienmodul 100, aufweisend ein Funkmodul 120, verbunden ist. In einem Schritt 408 wird das Anzeige- und Bedienmoduls 100 in dem Sensorgehäuse 200 angeordnet, wobei das Sensorgehäuse 200 das Anzeige- und Bedienmodul 100 und das Verbindungselement 140 vollständig aufnimmt.

Es sei noch angemerkt, dass die verschiedenen Ausführungsformen miteinander kombiniert werden können, sofern dies nicht explizit und/oder durch technische Unmöglichkeit ausgeschlossen ist. Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 100: Bedienmodul
- 112: oberer Teil
- 114: seitliche Griffe
- 115: Display
- 116: Bedientasten
- 118: unterer Teil
- 120: Funkmodul
- 140: elektrisches Verbindungselement
- 145: Leitung
- 160: Verbindungsgegenstück
- 165: Leitung
- 180: Leiterplatte
- 200: metallisches Sensorgehäuse
- 210: Sichtfenster
- 220: Hochfrequenzgehäusedurchführung
- 225: Leitung
- 240: Antenne
- 280: Sensorgerät
- 300: Feldgerät, Messgerät, Messsystem
- 400: Flussdiagramm
- 402 - 408: Schritte

## Patentansprüche

1. Abnehmbares Anzeige- und Bedienmodul (100) für ein Feldgerät (300) zur Füllstandmessung oder zur Grenzstandbestimmung, das Anzeige- und Bedienmodul (100) aufweisend:
ein Funkmodul (120); und
ein elektrisches Verbindungselement (140), das dazu eingerichtet ist, mit einem Verbindungsgegenstück (160) eine lösbare Verbindung zur Übertragung von Hochfrequenzsignalen von dem Funkmodul (120) an eine Hochfrequenzgehäusedurchführung (220) des Feldgeräts (300) zu bilden, wobei das elektrische Verbindungselement (140) zur Übertragung von Frequenzen in einem ISM-Band
eingerichtet ist, und/oder
wobei das elektrische Verbindungselement (140) zur Übertragung von Frequenzen zwischen 1 GHz und 10 GHz eingerichtet ist.

2. Anzeige- und Bedienmodul (100) nach Anspruch 1,
wobei das elektrische Verbindungselement (140) auf einer Leiterplatte (180) fixiert ist.

3. Anzeige- und Bedienmodul (100) nach Anspruch 2,
wobei das elektrische Verbindungselement (140) über ein Kabel (145) mit der Leiterplatte (180) verbunden ist.

4. Anzeige- und Bedienmodul (100) nach einem der vorhergehenden Ansprüche,
wobei das elektrische Verbindungselement (140) als Koaxialstecker und das Verbindungsgegenstück (160) als Koaxialbuchse ausgeführt ist, oder
das elektrische Verbindungselement (140) als Koaxialbuchse und das Verbindungsgegenstück (160) als Koaxialstecker ausgeführt ist.

5. Anzeige- und Bedienmodul (100) nach einem der vorhergehenden Ansprüche,
wobei das elektrische Verbindungselement (140) zur Übertragung von Frequenzen zwischen 2 GHz und 5 GHz eingerichtet ist.

6. Anzeige- und Bedienmodul (100) nach einem der vorhergehenden Ansprüche,
wobei das Anzeige- und Bedienmodul (100) zum Anordnen innerhalb eines Sensorgehäuses (200) eingerichtet ist.

7. Sensorgehäuse (200) für ein Feldgerät (300) zur Füllstandmessung oder zur Grenzstandbestimmung, das dazu eingerichtet ist, ein Anzeige- und Bedienmodul (100) mit einem ein Funkmodul (120) und einem elektrischen Verbindungselement (140) nach einem der vorhergehenden Ansprüche vollständig aufzunehmen,
das Sensorgehäuse (200) aufweisend eine Hochfrequenzgehäusedurchführung (220), die zur Übertragung von Hochfrequenzsignalen von dem Funkmodul (120) und zum Anschluss an eine Antenne (240) eingerichtet ist.

8. Sensorgehäuse (200) nach Anspruch 7,
wobei die Hochfrequenzgehäusedurchführung (220) als Koaxialstecker oder als Koaxialbuchse ausgeführt ist.

9. Sensorgehäuse (200) nach Anspruch 7 oder 8,
wobei das elektrische Verbindungselement (140) als Koaxialstecker oder als Koaxialbuchse ausgeführt ist.

10. Sensorgehäuse (200) nach Anspruch 7, 8 oder 9,
wobei die Antenne (240) in das Sensorgehäuse (200) integrierbar ausgeführt ist.

11. Verfahren zur Herstellung eines Feldgeräts (300) zur Füllstandmessung oder zur Grenzstandbestimmung, mit den Schritten:
bereitstellen eines Sensorgehäuses (200) nach einem der Ansprüche 7 bis 10 und eines abnehmbaren Anzeige- und Bedienmoduls (100) nach einem der Ansprüche 1 bis 6;
anordnen der Hochfrequenzgehäusedurchführung (220), die mit dem Verbindungsgegenstück (160) verbunden ist, an dem Sensorgehäuse (200); verbinden des Verbindungsgegenstücks (160) mit dem elektrischen Verbindungselement (140), das mit dem Funkmodul (120) des abnehmbaren Anzeige- und Bedienmoduls (100) verbunden ist; und
anordnen des Anzeige- und Bedienmoduls (100) in dem Sensorgehäuse (200), wobei das Sensorgehäuse (200) das Anzeige- und Bedienmodul (100) und das Verbindungselement (140) vollständig aufnimmt.

12. Verfahren nach Anspruch 11, mit den weiteren Schritten:
anordnen einer Antenne (240) an dem Sensorgehäuse (200); und
verbinden der Antenne (240) mit der Hochfrequenzgehäusedurchführung (220).

13. Verwendung eines abnehmbaren Anzeige- und Bedienmoduls (100) nach einem der Ansprüche 1 bis 6, oder eines Sensorgehäuses (200) nach einem der Ansprüche 7 bis 10 zur Füllstandmessung oder zur Grenzstandbestimmung.

## Claims

1. A removable display and operating module (100) for a measuring device and/or a field device (300) for level measurement or for limit level determination, the display and operating module (100) comprising:
a radio module (120); and
an electrical connection element (140) adapted to form a detachable connection with a connection counterpart (160) for transmitting radio frequency signals from the radio module (120) to a radio frequency housing feedthrough (220) and/or to an antenna (240) of the field device (300),
wherein the electrical connection element (140) is configured to transmit frequencies in an ISM band, and/or
wherein the electrical connection element (140) is adapted to transmit frequencies between 1 GHz and 10 GHz.

2. The display and operating module (100) according to claim 1,
wherein the electrical connection element (140) is fixed on a printed circuit board (180).

3. The display and operating module (100) according to claim 2,
wherein the electrical connection element (140) is connected to the circuit board (180) via a line (145).

4. The display and operating module (100) according to claim 1,
wherein the electrical connection element (140) is configured as a coaxial plug and the connection counterpart (160) is designed as a coaxial socket, or
the electrical connection element (140) is configured as a coaxial socket and the connection counterpart (160) as a coaxial plug.

5. The display and operating module (100) according to claim 1,
wherein the electrical connection element (140) is adapted to transmit frequencies between 2 GHz and 5 GHz.

6. The display and operating module (100) according to claim 1,
wherein the display and operating module (100) is adapted to be disposed within a sensor housing (200).

7. A sensor housing (200) for a field device (300) for level measurement or for limit level determination, which is configured to completely accommodate a display and operating module (100) with a radio module (120) and/or an electrical connection element (140) according to one of the preceding claims,
the sensor housing (200) comprising a radio frequency housing feedthrough (220) adapted to transmit radio frequency signals from the radio module (120) and to connect to the antenna (240).

8. The sensor housing (200) according to claim 8,
wherein the high-frequency housing feedthrough (220) is configured as a coaxial plug or as a coaxial socket.

9. The sensor housing (200) according to claim 8 or 9,
wherein the electrical connection element (140) is configured as a coaxial plug or as a coaxial socket.

10. The sensor housing (200) according to claim 8 or 9,
wherein the antenna (240) is designed to be integrated into the sensor housing (200).

11. A method of manufacturing a field device (300) for level measurement or level limit determination, comprising the steps of:
providing a sensor housing (200) according to any one of the claims 7 to 10 and of a display and operating module (100) according to any one of the claims 1 to 6;
arranging the radio frequency housing feedthrough (220) connected to the connection counterpart (160) on the sensor housing (200);
connecting the connection counterpart (160) to the electrical connection element (140), which is connected to a radio module (120) of a removable display and operating module (100); and
arranging the display and operating module (100) in the sensor housing (200), wherein the sensor housing (200) completely accommodates the display and operating module (100) and the connecting element (140).

12. The method of manufacture according to claim 12, comprising the further steps of:
disposing an antenna (240) on the sensor housing (200); and
connecting the antenna (240) to the high-frequency housing feedthrough (220).

13. Use of a display and operating module (100) according to any one of the claims 1 to 6, or of a sensor housing (200) according to any one of the claims 7 to 10 for fill level measurement or for limit level determination.

## Revendications

1. Module d'affichage et de commande amovible (100) pour un appareil de terrain (300) destiné à la mesure de niveau de remplissage ou la détermination de niveau limite, le module d'affichage et de commande (100) présentant :
un module radio (120) ; et
un élément de connexion électrique (140) qui est conçu pour former avec une pièce de connexion complémentaire (160) une connexion amovible pour la transmission de signaux haute fréquence du module radio (120) à une traversée de boîtier haute fréquence (220) de l'appareil de terrain (300),
dans lequel l'élément de connexion électrique (140) est conçu pour la transmission de fréquences dans une bande ISM et/ou
dans lequel l'élément de connexion électrique (140) est conçu pour la transmission de fréquences comprises entre 1 GHz et 10 GHz.

2. Module d'affichage et de commande (100) selon la revendication 1,
dans lequel l'élément de connexion électrique (140) est fixé sur une carte de circuit imprimé (180).

3. Module d'affichage et de commande (100) selon la revendication 2,
dans lequel l'élément de connexion électrique (140) est relié à la carte de circuit imprimé (180) par un câble (145) .

4. Module d'affichage et de commande (100) selon l'une des revendications précédentes,
dans lequel l'élément de connexion électrique (140) est réalisé sous la forme d'une fiche coaxiale et la pièce de connexion complémentaire (160) sous la forme d'une douille coaxiale, ou
l'élément de connexion électrique (140) est réalisé sous la forme d'une douille coaxiale et la pièce de connexion complémentaire (160) sous la forme d'une fiche coaxiale.

5. Module d'affichage et de commande (100) selon l'une des revendications précédentes,
dans lequel l'élément de connexion électrique (140) est conçu pour la transmission de fréquences comprises entre 2 GHz et 5 GHz.

6. Module d'affichage et de commande (100) selon l'une des revendications précédentes,
dans lequel le module d'affichage et de commande (100) est conçu pour être disposé à l'intérieur d'un boîtier de capteur (200).

7. Boîtier de capteur (200) pour un appareil de terrain (300) destiné à la mesure de niveau de remplissage ou la détermination de niveau limite, qui est conçu pour recevoir entièrement un module d'affichage et de commande (100) présentant un module radio (120) et un élément de connexion électrique (140) selon l'une des revendications précédentes,
le boîtier de capteur (200) présentant une traversée de boîtier haute fréquence (220) qui est conçue pour la transmission de signaux haute fréquence du module radio (120) et pour le raccordement à une antenne (240).

8. Boîtier de capteur (200) selon la revendication 7,
dans lequel la traversée de boîtier haute fréquence (220) est réalisée sous la forme d'une fiche coaxiale ou d'une douille coaxiale.

9. Boîtier de capteur (200) selon la revendication 7 ou 8, dans lequel l'élément de connexion électrique (140) est réalisé sous la forme d'une fiche coaxiale ou d'une douille coaxiale.

10. Boîtier de capteur (200) selon la revendication 7, 8 ou 9, dans lequel l'antenne (240) est réalisée de manière à pouvoir être intégrée dans le boîtier de capteur (200).

11. Procédé de fabrication d'un appareil de terrain (300) destiné à la mesure de niveau de remplissage ou la détermination de niveau limite, comprenant les étapes consistant à :
fournir un boîtier de capteur (200) selon l'une des revendications 7 à 10 et un module d'affichage et de commande amovible (100) selon l'une des revendications 1 à 6 ;
disposer sur le boîtier de capteur (200) la traversée de boîtier haute fréquence (220) qui est reliée à la pièce de connexion complémentaire (160) ;
relier la pièce de connexion complémentaire (160) à l'élément de connexion électrique (140) qui est relié au module radio (120) du module d'affichage et de commande amovible (100) ; et
disposer le module d'affichage et de commande (100) dans le boîtier de capteur (200), le boîtier de capteur (200) recevant entièrement le module d'affichage et de commande (100) et l'élément de connexion (140).

12. Procédé selon la revendication 11, comprenant les étapes supplémentaires consistant à :
disposer une antenne (240) sur le boîtier de capteur (200) ; et
relier l'antenne (240) à la traversée de boîtier haute fréquence (220).

13. Utilisation d'un module d'affichage et de commande amovible (100) selon l'une des revendications 1 à 6, ou d'un boîtier de capteur (200) selon l'une des revendications 7 à 10, pour la mesure de niveau de remplissage ou la détermination de niveau limite.
